(19) **Europäisches Patentamt**
**European Patent Office**
**Office européen des brevets**

(11) **EP 3 504 770 B1**

(12) **FASCICULE DE BREVET EUROPEEN**

(45) Date de publication et mention
de la délivrance du brevet:
**23.09.2020 Bulletin 2020/39**

(51) Int Cl.:
**H02J 7/34** *(2006.01)*    **E21B 19/09** *(2006.01)*

(21) Numéro de dépôt: **17737580.5**

(86) Numéro de dépôt international:
**PCT/EP2017/067355**

(22) Date de dépôt: **11.07.2017**

(87) Numéro de publication internationale:
**WO 2018/036711 (01.03.2018 Gazette 2018/09)**

(54) **PROCÉDÉ ET SYSTÈME DE GESTION D'ÉNERGIE D'UNE SUPERCAPACITÉ AU MOYEN D'UN MODÈLE DE VIEILLISSEMENT ET D'UNE PRÉDICTION DE LA HOULE**

VERFAHREN UND SYSTEM EINER ENERGIESTEUERUNG EINES SUPERKONDENSATORS MITTELS EINES VERALTERUNGSMUSTERS UND EINER DÜNNUNGVORAUSSAGE

METHOD AND SYSTEM FOR THE ENERGY MANAGEMENT OF A SUPERCAPACITOR BY MEANS OF AN AGING MODEL AND OF SWELL PREDICTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.08.2016 FR 1657898**

(43) Date de publication de la demande:
**03.07.2019 Bulletin 2019/27**

(73) Titulaire: **IFP Energies nouvelles**
**92852 Rueil-Malmaison (FR)**

(72) Inventeur: **PETIT, Martin**
**69007 Lyon (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**WO-A1-2015/133896    WO-A1-2016/087171**

**EP 3 504 770 B1**

**Description**

La présente invention concerne le domaine de la gestion d'énergie d'un moyen de stockage d'énergie d'un système électrique, comprenant au moins une supercapacité. En particulier, la présente invention peut être appliquée au domaine des systèmes houlomoteurs, ou au domaine des compensateurs de pilonnement.

L'utilisation d'un pack de supercapacités comme source et stockage réversible d'énergie et de puissance électrique se développe dans les applications mobiles ou stationnaires mettant en jeu de fortes puissances sur des temps relativement courts (de l'ordre de la seconde). En effet, une supercapacité est caractérisée par une densité de puissance pouvant atteindre plusieurs dizaines de kW/kg, au contraire des accumulateurs qui présentent une densité de puissance seulement de quelques centaines de W/kg. Une supercapacité est également caractérisée par une excellente cyclabilité (en général supérieure à un million de cycles contre quelques milliers pour les accumulateurs). C'est pourquoi les supercapacités sont des technologies de stockage électrique privilégiées dans les applications de récupération d'énergie marine, car la houle induit sur les supercapacités une sollicitation pseudo-périodique en cyclage, caractérisée par des périodes courtes et des puissances variables potentiellement élevées.

Parmi les applications envisagées de récupération d'énergie marine, la demande de brevet FR 3029712 concerne l'électrification d'un compensateur de pilonnement pour le forage en mer, avec une solution technique pouvant intégrer des supercapacités pour le stockage réversible de l'énergie électrique, qui permet la récupération de l'énergie marine.

Lors du fonctionnement en mer d'un système électrifié embarquant un stockage électrique par supercapacités et permettant la récupération d'énergie marine, le moteur électrique fait alternativement des envois de la puissance récupérée par le mouvement de houle vers le pack de supercapacités (charge) et des appels de puissance au pack de supercapacités (décharge) pour le fonctionnement du système électrifié. Dans de telles applications, la puissance stockée et produite par le pack de supercapacités peut être élevée, de l'ordre du MW, ce qui nécessite des niveaux de tension et de courant appropriés. Les packs sont classiquement constitués de modules, connectés entre eux en série et/ou en parallèle. Chaque module est constitué de plusieurs cellules unitaires de supercapacités connectées elles-mêmes en série et/ou parallèle. L'architecture est étudiée pour répondre au cahier des charges applicatif.

Un premier problème technique qui se pose est d'augmenter le rendement énergétique du système électrifié permettant la récupération de l'énergie marine. Suivant l'état de charge du pack de supercapacités, qui conditionne la puissance et l'énergie disponibles ou acceptables dans le pack, la puissance demandée ou la puissance restituée sera dirigée vers le système de stockage mais pas forcément débité ou admis. En effet, si le système de stockage n'est pas disposé à recevoir de la puissance (état de charge trop élevé), celle-ci est dissipée et l'énergie marine récupérée est perdue. De plus, si le système de stockage n'est pas disposé à en fournir (état de charge trop bas), la puissance électrique nécessaire au bon fonctionnement du système électrifié est fournie par une alimentation externe ; mais du point de vue de la supercapacité, l'énergie est manquante.

Un second problème technique est associé au vieillissement des supercapacités observé par l'homme du métier lors d'une utilisation à long terme, même en usage normal. En effet, des phénomènes physico-chimiques et mécaniques conduisent progressivement à une dégradation irréversible des composants internes des supercapacités, ce qui provoque une diminution de la capacité de stockage, qui affecte l'énergie des supercapacités, et à une augmentation de la résistance interne, qui se traduit par une perte de puissance des supercapacités. La phénoménologie et la cinétique du vieillissement dépendent notamment de la nature des composants internes mais aussi des conditions environnementales (température) et des conditions d'utilisation du système de stockage (en particulier de la tension et du niveau moyen de courant).

Afin de répondre au cahier des charges fonctionnel et technique du système électrifié permettant la récupération d'énergie marine, ainsi qu'aux impératifs industriels de coût, le pack de supercapacités ne doit pas perdre d'énergie récupérée par la houle, l'énergie manquante doit être minime, la taille du pack doit être la plus petite possible et la durée de vie la plus longue possible (en d'autres termes, le pack de supercapacités doit avoir un vieillissement limité).

Une méthode et un dispositif permettant d'optimiser l'utilisation du système de stockage électrique par supercapacités pour récupérer l'énergie marine, tout en préservant sa durée de vie, s'avèrent donc nécessaires.

Différentes utilisation de ces supercapacités ont été développées. Toutefois, elles ne répondent pas à l'ensemble des problèmes soulevés ci-dessus.

Par exemple, la demande de brevet WO 2013/096128 décrit un système hybride pneumatique/électrique pour suspendre un « riser » (colonne montante), pour exploiter le pétrole en mer profonde, et permettant de compenser le pilonnement de la houle sur le riser. Le système de stockage pneumatique - hydraulique et le système de stockage électrique par supercapacités récupèrent une partie de l'énergie de la houle par le biais d'un dispositif mécanique et l'utilisent dans le compensateur de pilonnement de la houle. Le concept de gestion d'énergie présenté dans cette demande de brevet WO 2013/096128 se contente d'une gestion passive de l'état des systèmes de stockage en dirigeant l'énergie vers le réseau électrique ou vers le système de stockage, suivant l'état de charge ou de puissance des systèmes de stockage. Toutefois, les états de houle ne sont pas pris en compte. De plus, la problématique de préservation des systèmes de stockage par rapport à leur vieillissement n'est pas prise en compte.

Un autre exemple est décrit dans le brevet EP 2268537 B1, qui présente un dispositif électrique et une méthode de compensation active du pilonnement lié à la houle applicables à tout système flottant ayant un besoin de stabilité en environnement marin. Le stockage de l'énergie électrique se fait par l'usage d'un pack de supercapacités ou de batteries ou d'une combinaison de supercapacités et de batteries. Ce système de stockage embarqué sur le système flottant récupère une partie de l'énergie de la houle par le biais d'un dispositif mécanique (moteur/générateur) et l'utilise dans le compensateur de pilonnement de la houle. Le compensateur de pilonnement de houle peut également être alimenté à partir du réseau électrique local. Dans ce brevet EP 2268537 B1, la gestion des flux énergétiques se fait en fonction de l'état de la mer au niveau du système flottant. Des mesures locales de houle permettent d'évaluer la quantité d'énergie marine ou électrique à utiliser pour compenser le pilonnement. Ensuite, le système de gestion de l'énergie compare la tension du système de stockage électrique avec ses limites de tension de fonctionnement : si la tension est trop basse, le système de gestion de l'énergie va faire appel à l'électricité provenant du réseau électrique pour compenser le pilonnement, et va récupérer l'énergie de houle pour recharger le système de stockage. Si la tension est intermédiaire, le système de gestion de l'énergie va utiliser de préférence l'énergie électrique du système de stockage et va stocker l'énergie récupérée par la houle. Si enfin la tension du système de stockage atteint sa limite supérieure, le système de gestion de l'énergie va dissiper l'énergie excédentaire récupérée par la houle et utilise l'énergie électrique du système de stockage. Là encore, la problématique de préservation des systèmes de stockage par rapport à leur vieillissement n'est pas prise en compte.

On observe qu'il n'existe pas de dispositif permettant d'optimiser, en fonction de la sollicitation à court terme, la charge moyenne d'un pack de supercapacités utilisé dans un système basé sur la récupération de l'énergie (marine), afin d'optimiser simultanément le rendement énergétique du système et la durée de vie des supercapacités.

Afin de pallier ces inconvénients, la présente invention concerne un procédé et un système de gestion d'énergie d'un moyen de stockage d'énergie d'un système électrique. Le système électrique comprend au moins un élément mobile sous l'action de la houle, un moyen d'entraînement du moyen mobile, et un moyen de stockage d'énergie. Le moyen de stockage d'énergie comporte au moins une supercapacité. Selon l'invention, on contrôle la gestion d'énergie de la supercapacité, en déterminant préalablement le vieillissement de la supercapacité au moyen d'un modèle de vieillissement et d'une prédiction de sa sollicitation future en fonction d'une estimation de la houle future. Ainsi, il est possible d'optimiser, de manière prédictive, l'efficacité du système électrique tout en maîtrisant le vieillissement de la supercapacité.

**Le procédé et le système selon l'invention**

L'invention concerne un procédé de gestion d'énergie d'un moyen de stockage d'énergie d'un système électrique, ledit système électrique comportant au moins un élément mobile, au moins un moyen d'entraînement électrique dudit élément mobile, et au moins un moyen de stockage d'énergie électrique pour fournir ou récupérer une énergie électrique audit moyen d'entraînement, ledit élément mobile étant soumis à la houle, et ledit moyen de stockage comprenant au moins une supercapacité. Pour ce procédé, on construit un modèle de vieillissement de ladite supercapacité, ledit modèle de vieillissement reliant le vieillissement de ladite supercapacité à une sollicitation de ladite supercapacité, et on réalise les étapes suivantes :

a) on détermine un état de la houle future ;
b) on déduit dudit état de la houle future une sollicitation future de ladite supercapacité par ledit moyen d'entraînement ;
c) on détermine ledit vieillissement de ladite supercapacité au moyen dudit dudit modèle de vieillissement et de ladite sollicitation de ladite supercapacité ; et
d) on contrôle l'énergie de ladite supercapacité dudit moyen de stockage d'énergie en fonction dudit vieillissement de ladite supercapacité.

Selon un mode de réalisation de l'invention, on détermine ledit état de la houle future au moyen de données météorologiques et/ou au moyen de capteurs et/ou au moyen d'une méthode d'estimation de la houle.

Avantageusement, ledit modèle de vieillissement de ladite supercapacité est déterminé au moyen d'une loi de Eyring ou au moyen d'un modèle de Kovaltchouk.

Conformément à une mise en œuvre, la gestion d'énergie de ladite supercapacité est choisie parmi une charge de ladite supercapacité depuis un réseau électrique et/ou une batterie électrique, et/ou une décharge de ladite supercapacité dans un réseau électrique et/ou dans une batterie électrique et/ou dans un composant dissipatif.

Selon une caractéristique, on détermine ladite gestion d'énergie de ladite supercapacité en comparant l'état de charge de ladite supercapacité par rapport à au moins une cible d'état de charge, ladite cible d'état de charge de ladite supercapacité étant définie au moyen dudit vieillissement de ladite supercapacité.

De manière avantageuse, on détermine ladite gestion d'énergie en mettant en œuvre les étapes suivantes :

a) on détermine l'état de charge moyen cible $SOC_{obj}$ futur de ladite supercapacité en fonction dudit vieillissement,
b) on compare l'état de charge cible $SOC_{obj}$ à l'état de charge réel $SOC_{ucap}$ de ladite supercapacité, et
c) en fonction de ladite comparaison, on charge ou on décharge la supercapacité, de la manière suivante :

i) si l'état de charge réel est supérieur à l'état de charge cible, alors on décharge ladite supercapacité, et
ii) si l'état de charge réel est inférieur à l'état de charge cible, alors on charge ladite supercapacité.

De plus, l'invention concerne un système de gestion d'énergie d'un moyen de stockage d'énergie d'un système électrique, ledit système électrique comportant au moins un élément mobile, au moins un moyen d'entraînement électrique dudit élément mobile, et au moins un moyen de stockage d'énergie électrique pour fournir ou récupérer une énergie électrique audit moyen d'entraînement, ledit élément mobile étant soumis à la houle, et ledit moyen de stockage comprenant au moins une supercapacité. Ledit système de gestion comprend des moyens de détermination d'un état de la houle future, des moyens de détermination de la sollicitation future de ladite supercapacité par ledit moyen d'entraînement, des moyens de détermination du vieillissement de ladite supercapacité au moyen d'un modèle de vieillissement de ladite supercapacité et de ladite sollicitation de ladite supercapacité, et des moyens de contrôle de la gestion d'énergie de ladite supercapacité à partir dudit vieillissement de ladite supercapacité, ledit modèle de vieillissement de ladite supercapacité reliant le vieillissement de ladite supercapacité à ladite sollicitation.

Conformément à un mode de réalisation, lesdits moyens de détermination d'un état de la houle future comporte des moyens d'analyse de données météorologiques et/ou des capteurs et/ou des moyens d'estimation de la houle.

Selon une mise en œuvre, ledit modèle de vieillissement de ladite supercapacité est déterminé au moyen d'une loi de Eyring ou au moyen d'un modèle de Kovaltchouk.

Selon une option de réalisation, ladite supercapacité étant reliée à un réseau électrique et/ou une batterie électrique, lesdits moyens de contrôle de la gestion d'énergie électrique sont aptes à contrôler la charge et/ou la décharge de ladite supercapacité vers ou depuis ledit réseau électrique et/ou ladite batterie électrique.

Selon une variante de réalisation, lesdits moyens de contrôle comprennent des moyens de comparaison de l'état de charge de ladite supercapacité par rapport à au moins une cible d'état de charge, la dite cible d'état de charge de ladite supercapacité étant définie au moyen dudit vieillissement de ladite supercapacité.

En outre, l'invention concerne un système houlomoteur pour convertir l'énergie de la houle en énergie électrique, ledit système houlomoteur comprenant un moyen mobile, une machine de conversion électrique, et un moyen de stockage de l'énergie électrique comportant au moins une supercapacité. Ledit système houlomoteur comporte un système de gestion d'énergie selon l'une des caractéristiques précédentes.

L'invention concerne également un compensateur de pilonnement pour des outils de forage accrochés à une installation mobile en mer comprenant un moyen d'entraînement électrique et un moyen de stockage d'énergie électrique comportant au moins une supercapacité. Ledit compensateur de pilonnement comporte un système de gestion d'énergie selon l'une des caractéristiques précédentes.

**Présentation succincte des figures**

D'autres caractéristiques et avantages du procédé et du système selon l'invention, apparaîtront à la lecture de la description ci-après d'exemples non limitatifs de réalisations, en se référant aux figures annexées et décrites ci-après.

La figure 1 illustre les étapes du procédé selon un mode de réalisation de l'invention.
La figure 2 illustre un système électrique comprenant un système de gestion d'énergie selon un mode de réalisation de l'invention.
La figure 3 est un schéma électrique équivalent de modélisation d'une supercapacité.
La figure 4 illustre la puissance demandée au système électrique pour un exemple.
La figure 5 représente un graphique de l'objectif d'états de charge moyens optimaux en fonction de la puissance fournie pour un exemple selon l'invention.
Les figures 6a à 6c illustrent respectivement, la puissance demandée, l'énergie pendant la charge, et l'énergie pendant la décharge selon un premier exemple comparatif de l'art antérieur, pour le cas illustré à la figure 4.
Les figures 7a à 7c illustrent respectivement, la puissance demandée, l'énergie pendant la charge, et l'énergie pendant la décharge selon un deuxième exemple comparatif de l'art antérieur, pour le cas illustré à la figure 4.
Les figures 8a à 8c illustrent respectivement, la puissance demandée, l'énergie pendant la charge, et l'énergie pendant la décharge selon un mode de réalisation de l'invention, pour le cas illustré à la figure 4.
La figure 9 illustre un système houlomoteur selon un mode de réalisation de l'invention.
La figure 10 illustre un compensateur de pilonnement selon un mode de réalisation de l'invention.

## Description détaillée de l'invention

La présente invention concerne un procédé et un système de gestion d'énergie d'un moyen de stockage d'un système électrique (système électrifié). Le système électrique permet la récupération de l'énergie marine, c'est-à-dire de l'énergie de la houle. Pour cela, le système électrique comporte au moins :

- un élément mobile soumis à la houle : en d'autres termes, le mouvement de l'élément mobile est influencé par la houle,
- un moyen d'entraînement électrique : le moyen d'entraînement électrique entraîne l'élément mobile et il peut être réversible ; en d'autres termes, il peut être moteur pour déplacer l'élément mobile, et il peut être générateur quand l'élément mobile est soumis à un mouvement (notamment lié à la houle) ; le moyen d'entraînement électrique peut être une machine électrique, et
- un moyen de stockage de l'énergie électrique pour fournir (restituer) ou récupérer une énergie électrique au moyen d'entraînement électrique. Ainsi, lorsque le moyen d'entraînement est moteur, le moyen de stockage de l'énergie électrique fournit (restitue) de l'énergie électrique au moyen d'entraînement, et lorsque le moyen d'entraînement est générateur, le moyen de stockage de l'énergie électrique récupère l'énergie générée par le moyen d'entraînement.

Selon l'invention, le moyen de stockage de l'énergie électrique comporte au moins une supercapacité (également appelée supercondensateur). De préférence, le moyen de stockage de l'énergie électrique peut comporter une pluralité de supercapacités associées sous forme d'un module ou d'un pack. Par exemple, un pack de supercapacités peut être constitué d'une pluralité de modules, connectés entre eux en série et/ou en parallèle, et chaque module peut être constitué de plusieurs cellules unitaires (supercapacités) connectées elles-mêmes en série et/ou parallèle.

On rappelle qu'une supercapacité est caractérisée par une densité de puissance pouvant atteindre plusieurs dizaines de kW/kg ; au contraire, les accumulateurs présentent une densité de puissance seulement de quelques centaines de W/kg. Une supercapacité est également caractérisée par une excellente cyclabilité (en général supérieure à un million de cycles contre quelques milliers pour les accumulateurs). C'est pourquoi les supercapacités sont des technologies de stockage électrique privilégiées dans les applications de récupération d'énergie marine, car la houle induit sur les supercapacités une sollicitation pseudo-périodique en cyclage, caractérisée par des périodes courtes et des puissances variables potentiellement élevées.

On rappelle également que les supercapacités sont des systèmes de stockage de l'électricité basés sur deux électrodes séparées par un film poreux diélectrique, appelé séparateur et imprégné par un électrolyte. Contrairement aux batteries, le principe de stockage électrique de l'énergie n'est pas basé sur la conversion électrochimique mais sur l'interaction électrostatique à l'interface électrode/électrolyte appelée double couche électrique. Le processus électrostatique reposant seulement sur le mouvement des ions entre deux électrodes est beaucoup plus rapide que le processus électrochimique qui demande un changement de phases. Les temps de charge/décharge sont donc beaucoup plus rapides pour les supercondensateurs (de l'ordre de la seconde) que pour les batteries (constante de temps de l'ordre de l'heure). Ainsi, les supercondensateurs sont caractérisés par une densité de puissance importante mais une faible densité énergétique.

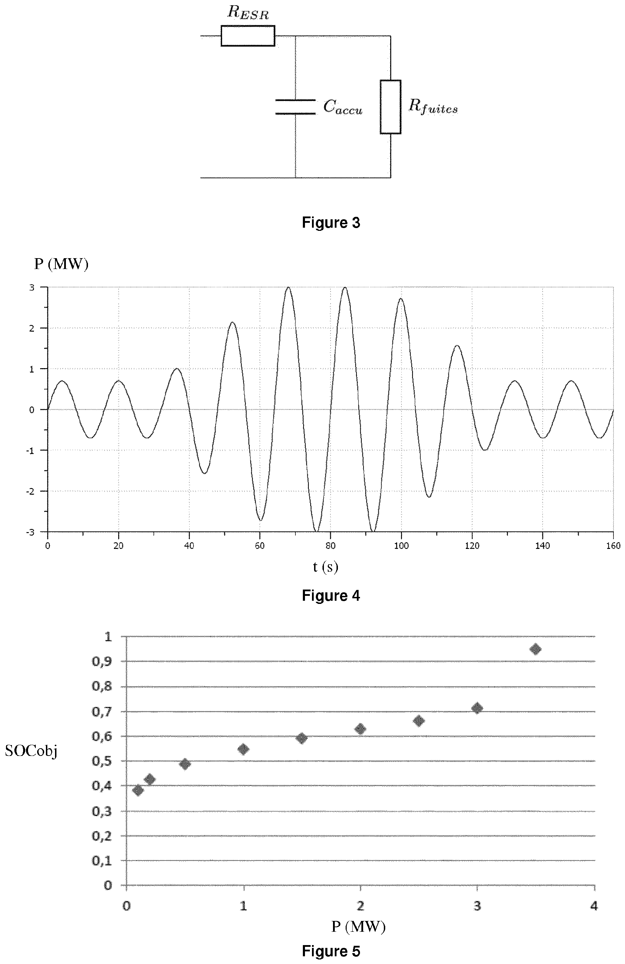

Ce système peut être simplement représenté comme une résistance $R_{ESR}$ en série avec un condensateur $C_{accu}$, lui-même en parallèle avec une résistance de fuite $R_{fuites}$. La figure 3 illustre une telle modélisation.

Dans la suite de la description et pour les revendications, les termes vagues, flots marins, et houle sont considérés comme équivalents.

Le procédé selon l'invention comporte les étapes suivantes :

1) Détermination de la houle future,
2) Détermination de la sollicitation future de la supercapacité,
3) Construction du modèle de vieillissement de la supercapacité,
4) Détermination du vieillissement de la supercapacité, et
5) Gestion de l'énergie.

L'étape 3) de construction du modèle de vieillissement de la supercapacité peut être réalisée avant, après ou pendant les étapes 1) et 2).

Le procédé selon l'invention utilise des informations fournies par un système d'alerte (détermination de la houle) pour décider de la stratégie de gestion d'énergie des supercapacités afin d'améliorer le fonctionnement du système électrifié permettant la récupération d'énergie marine, en termes de rendement et de vieillissement de la supercapacité.

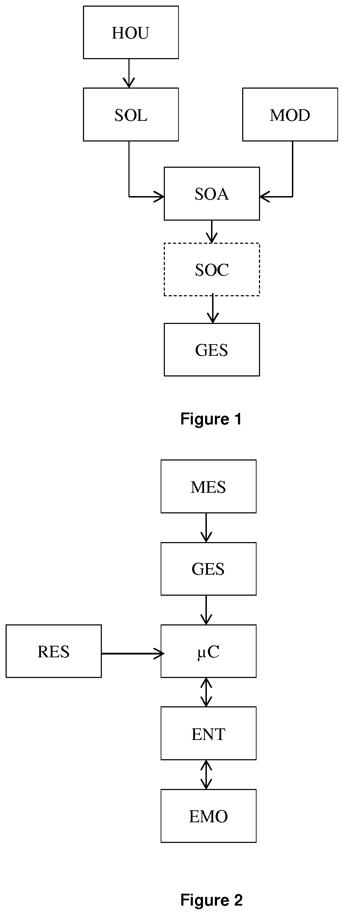

La figure 1 illustre de manière schématique et non limitative, le procédé selon l'invention avec ces cinq étapes, et avec une étape facultative de détermination de l'état de charge de la supercapacité. Ainsi, le mode de réalisation de la figure 1 comporte les étapes suivantes :

1) Détermination de la houle future (HOU),
2) Détermination de la sollicitation future de la supercapacité (SOL),
3) Construction du modèle de vieillissement de la supercapacité (MOD),
4) Détermination du vieillissement de la supercapacité (SOA),
4') (facultatif) Détermination de l'état de charge de la supercapacité (SOC), et
5) Gestion de l'énergie (GES).

## 1) Détermination de la houle future

Il s'agit lors de cette étape, de prédire l'état de la houle future (également appelé ordre de grandeur de la houle), pour au moins un court terme, à l'emplacement du moyen mobile. On appelle état de la houle, les caractéristiques macroscopiques de la houle, en particulier l'amplitude et la fréquence de la houle. On appelle court terme, un temps correspondant sensiblement à une dizaine de périodes de la houle.

Selon un mode de réalisation de l'invention, la houle future peut être calculée grâce aux données météorologiques de la région, dans laquelle est implanté le système électrique. Ces données peuvent être transmises en continu à un système de gestion d'énergie qui, connaissant la corrélation préalablement établie entre des données météorologiques et la houle, peut alors l'utiliser pour en déduire les futurs profils de la houle qui sera vue par l'élément mobile.

Alternativement, un réseau de capteurs peut être installé autour du site d'implantation du système électrique, ces capteurs permettant de mesurer les états de la houle afin d'évaluer les états de la houle à venir sur le site d'implantation du système électrique à court terme (par exemple dans les prochaines minutes). De même que précédemment, ces données peuvent être transmises en continu à un système de gestion d'énergie qui peut alors les utiliser pour en déduire les futurs profils de la houle qui sera vue par l'élément mobile.

Conformément à une variante de réalisation, la détermination de la houle peut être mise en œuvre au moyen d'une méthode d'estimation de la houle, par exemple selon la méthode décrite dans la demande de brevet dont le numéro de dépôt est FR 1560260, qui utilise un modèle autorégressif de la houle.

## 2) Détermination de la sollicitation future de la supercapacité

Lors de cette étape, on détermine (on prédit) la sollicitation future (pour au moins un court terme) de la supercapacité. Cette détermination est mise en œuvre en fonction de la prédiction de l'état de la houle future réalisée à l'étape précédente. Ainsi, on détermine en fonction de la houle future, si de l'énergie doit être apportée ou récupérée au moyen d'entraînement par la supercapacité. Pour cette étape, on prend en compte le comportement du moyen d'entraînement du système électrique. Pour cela, on peut utiliser un modèle du moyen d'entraînement et de l'élément mobile, qui relie l'état de la houle aux sollicitations de la supercapacité.

La sollicitation de la supercapacité peut concerner notamment la tension, et le courant circulant dans celle-ci.

## 3) Construction du modèle de vieillissement de la supercapacité

Lors de cette étape, on construit un modèle de vieillissement de la supercapacité. Le modèle de vieillissement de la supercapacité relie le vieillissement de la supercapacité à sa sollication. Le vieillissement de la supercapacité désigne la variation (la dégradation) des caractéristiques physiques des constituants de la supercapacité au fur et à mesure de son utilisation. Celui-ci peut avoir diverses origines. Le vieillissement est corrélé à la durée de vie de la supercapacité. Le modèle de vieillissement peut prendre en compte des paramètres d'utilisation de la supercapacité tels que la température, le cyclage, etc, ces paramètres étant dépendant des sollicitations de la supercapacité (tension, courant...).

Outre ces considérations liées aux besoins en puissance, le vieillissement (donc la durée de vie) des supercapacités peut être aussi impacté par les conditions de fonctionnement. La dégradation progressive des supercapacités se traduit par une baisse des performances en puissance et en énergie, en lien avec un accroissement de la résistance interne et une baisse de capacité de l'une ou des deux électrodes. Les principaux facteurs favorisant le vieillissement, connus de l'homme du métier quelle que soit la technologie de supercapacité, sont la tension élevée, la température élevée et un courant moyen élevé.

Selon un mode de réalisation de l'invention, le modèle de vieillissement SOA (de l'anglais State of Aging) de la supercapacité peut être déterminé à l'aide d'une loi d'Eyring qui permet d'accumuler les dommages causés par les différents facteurs de vieillissement par rapport à un état de référence (température $Tref$ tension $Vref$ et courant nul) :

EP 3 504 770 B1

$$\frac{dSOA}{dt} = \frac{1}{T_{life}^{ref}} exp\left(\frac{T - T_{ref}}{T_0}\right)\left(exp\left(\frac{V - V_{ref}}{V_0}\right) + K\right) exp\left(k_{RMS}\frac{I_{RMS}}{C_{accu}^0}\right)$$

Dans cette expression, $T_{life}^{ref}$ est le temps caractéristique de vieillissement à la température $T_{ref}$ (en °C), à la tension $V_{ref}$ (en V) et au courant efficace $I_{RMS}$ (de l'anglais « Root Mean Square », RMS) nul. $T$ est la température de la supercapacité, $T_0$ est une température d'ajustement (en K), $V_0$ (en V) est une tension d'ajustement, $k_{RMS}$ est un paramètre d'ajustement décrivant l'effet du cyclage sur le vieillissement (en s/V) et $C_{accu}^0$ est la capacité initiale de la cellule (en F). $T_{life}^{ref}$ correspond à la durée de vie nominale de la supercapacité à la tension $V_{ref}$ et à la température $T_{ref}$. La température T de la supercapacité est déterminée par mesure (cette mesure est généralement réalisée pour les packs de supercapacité pour des raisons de sécurité).

Selon une alternative, le modèle de vieillissement de la supercapacité peut être déterminé au moyen du modèle de Kovaltchouk. Ce modèle est décrit notamment dans le document Kovaltchouk, T.; Multon, B.; Ben Ahmed, H.; Aubry, J.; Venet, P. Enhanced aging model for supercapacitors taking into account power cycling: Application to the sizing of an Energy Storage System in a Direct Wave Energy Converter:. In, 2014; pp 1-10.

<u>4) Détermination du vieillissement de la supercapacité</u>

Lors de cette étape, on détermine (ou encore on prédit), pour un court terme, le vieillissement futur de la supercapacité au moyen du modèle de vieillissement de la supercapacité déterminé à l'étape précédente, et au moyen de la sollicitation de la supercapacité déterminée à l'étape 2).

Selon un mode de réalisation de l'invention, on peut appliquer le modèle de vieillissement de la supercapacité à la tension, au courant, et à la température déterminés lors de l'étape 2).

Le vieillissement déterminé lors de cette étape correspond donc au vieillissement de la supercapacité, qui est dépendant de l'état de la houle à venir.

<u>5) Gestion de l'énergie</u>

Lors de cette étape, on détermine, puis on contrôle la gestion de l'énergie de la supercapacité en fonction du vieillissement de la supercapacité. Ainsi, on détermine une gestion de l'énergie qui permet de restituer ou récupérer de manière optimale l'énergie électrique du moyen d'entraînement (avec le minimum de pertes énergétiques), tout en limitant le vieillissement de la supercapacité. Le contrôle de la gestion de l'énergie peut consister en une charge ou une décharge de l'énergie électrique de la supercapacité. Le contrôle de la gestion de l'énergie consiste ensuite à appliquer la gestion déterminée à la supercapacité.

En l'occurrence, la détermination de l'état de la houle future permet de prévoir la hauteur des vagues arrivant sur le lieu du système électrifié, et donc d'anticiper l'amplitude des sollicitations en puissance demandées (en cyclage pseudo-périodique) au système de stockage d'énergie. Il est ainsi possible de calculer une répartition d'énergie optimale pour augmenter le rendement énergétique et limiter le vieillissement des supercapacités, connaissant l'ordre de grandeur des futures puissances (admises et fournies) que « verra » le système de stockage par supercapacités. Avantageusement, une répartition d'énergie entre des supercapacités et un réseau électrique peut être mise en œuvre par un gestionnaire d'énergie.

Selon un mode de réalisation de l'invention, le moyen de stockage d'énergie électrique (qui comprend la supercapacité) peut être relié à un réseau électrique. Alternativement ou en outre, le moyen de stockage d'énergie électrique peut comprendre au moins une batterie électrique, par exemple une batterie du type lithium ion ; cette batterie peut être reliée à la supercapacité, et peut servir alors de système de stockage tampon. Alternativement ou en outre, la supercapacité peut être reliée à un composant dissipatif d'énergie électrique, par exemple une résistance électrique. Cette solution est peu coûteuse mais entraîne une perte d'énergie.

Pour ces options de réalisation, la gestion de l'énergie peut consister en une charge de la supercapacité depuis un réseau électrique et/ou depuis une batterie électrique. Ainsi, il est possible de recharger la supercapacité à son état de charge optimal. La gestion de l'énergie peut également consister en une décharge de la supercapacité dans le réseau électrique et/ou dans la batterie électrique et/ou dans le composant dissipatif d'énergie électrique. La décharge permet de dissiper l'énergie en surplus.

Selon un mode de réalisation, la détermination de gestion de l'énergie peut être réalisée par résolution du problème permettant de calculer la tension optimale U suivant :

$$\min_U \frac{dSOA}{dt} / \begin{cases} P_{disponible} \geq P_{fournie} \\ E_{disponible} \geq E_{fournie} \\ I_{RMS} \leq I_{max}^{RMS} \end{cases}$$

avec SOA le vieillissement de la supercapacité, U la tension optimale de la supercapacité, $I_{max}^{RMS}$ le courant efficace maximum, $P_{disponible}$ la puissance disponible par la supercapacité, $P_{fournie}$ la puissance demandée par le système, $E_{disponible}$ l'énergie disponible par la supercapacité, et $E_{fournie}$, l'énergie nécessaire pour le fonctionnement du système. Pour cette détermination, on peut considérer la modélisation de la supercapacité illustrée à la figure 3.

Conformément à une mise en œuvre de l'invention, la détermination de la gestion d'énergie peut prendre en compte des contraintes de fonctionnement de la supercapacité. En effet, pour assurer la sécurité et la longévité de fonctionnement des supercapacités, les fabricants de supercapacités définissent des limites de fonctionnement à ne pas dépasser. Ainsi, pour éviter une surcharge de la cellule, une tension maximale de fonctionnement est donnée, et parfois une tension minimale est aussi indiquée. De plus, pour limiter l'échauffement un courant efficace moyen RMS (de l'anglais « Root Mean Square ») maximum est préconisé limitant l'échauffement à une quarantaine de degrés. Par exemple dans le cas de la supercapacité cylindrique Maxwell 3000F ® (Maxwell, USA), les limites imposées par le constructeur sont indiquées dans le tableau 1. Ce tableau donne ainsi deux valeurs de tension maximales ainsi que deux valeurs de courant maximales. Les valeurs les plus élevées correspondent à des tolérances pour un usage ponctuel qu'il convient de ne pas répéter et de limiter dans la durée.

Tableau 1 - Contraintes de la supercapacité Maxwell 3000F ®

| Contraintes | Valeurs |
|---|---|
| Tension max | 2.7 V |
| Tension instantanée max | 2.85 V |
| Courant max | 1900 A |
| Courant efficace moyen max | 210 A |

Selon un mode de réalisation de l'invention, pour la détermination de la gestion d'énergie, on peut mettre en œuvre les étapes suivantes, à partir de la détermination des futures sollicitations du système de stockage :

a) on détermine une tension U de la supercapacité qui minimise la variation du veillissement de la supercapacité, en fonction de la future sollicitation déterminée à l'étape précédente tout en répondant aux demandes du système (énergie, puissance et courant), puis on en déduit l'état de charge moyen SOC de la supercapacité ; il s'agit de l'état de charge moyen le plus adapté à l'état de la houle ; cet état de charge futur est défini comme état de charge cible $SOC^{obj}$ pour la supercapacité,

b) on compare l'état de charge cible $SOC^{obj}$ à l'état de charge réel $soc^{ucap}$ donné par la tension des supercapacités, et

c) en fonction de la comparaison, on charge ou on décharge la supercapacité (par exemple depuis un réseau électrique et/ou une batterie électrique et/ou dans un composant dissipatif) :

i) si l'état de charge réel est supérieur à l'état de charge cible ($SOC^{obj}$ > $SOC^{ucap}$), alors on décharge la supercapacité, et

ii) si l'état de charge réel est inférieur à l'état de charge cible ($SOC^{obj}$ < $SOC^{ucap}$), alors on charge la supercapacité.

En outre, la présente invention concerne un système de gestion d'énergie d'un système de stockage d'énergie électrique. Le système de gestion d'énergie est apte à mettre en œuvre le procédé de gestion d'énergie selon l'un des modes de réalisation précédemment décrits, ou selon l'une quelconque des combinaisons des modes de réalisation précédemment décrits.

Selon l'invention, le système de gestion comprend au moins :

- des moyens de détermination d'un état de la houle (c'est-à-dire d'un ordre de grandeur de la houle) future,
- des moyens de détermination de la sollicitation future de la supercapacité par le moyen d'entraînement : ces moyens prennent en compte l'état de la houle future,
- des moyens de détermination du vieillissement de la supercapacité au moyen d'un modèle de vieillissement de la supercapacité et de la sollicitation future de la supercapacité, et
- des moyens de contrôle de la gestion d'énergie de ladite supercapacité à partir du vieillissement de la supercapacité, le modèle de vieillissement de la supercapacité reliant le vieillissement de la supercapacité à sa sollicitation.

La figure 2 illustre de manière schématique et non limitative un système électrique comprenant un système de gestion d'énergie selon un mode de réalisation de l'invention. Le système électrique comporte au moins :

- des moyens de détermination d'un état de la houle MES,
- un système de gestion d'énergie GES qui est reçoit l'état de la houle en provenance des moyens de détermination d'un état de la houle MES,
- au moins une supercapacité µC, le système de gestion d'énergie contrôlant l'énergie restituée et récupérée par la supercapacité µC,
- facultativement, la supercapacité µC peut être reliée à un réseau électrique RES pour la charge ou la décharge, et/ou à une batterie électrique (non représentée) et/ou à un composant électrique dissipatif (non représenté),
- un moyen d'entraînement ENT qui est relié à la supercapacité µC, pour récupérer ou restituer une énergie, et
- un élément mobile EMO, qui est entraîné par le moyen d'entraînement, et qui est soumis à la houle.

Selon un mode de réalisation de l'invention, les moyens de détermination de l'état de la houle future peuvent comporter des moyens d'analyse de données météorologiques et/ou des capteurs et/ou des moyens d'estimation de la houle. Les moyens de détermination d'un état de la houle peuvent être aptes à mettre en œuvre l'une des variantes de l'étape 1) précédemment décrite.

Conformément à une variante de réalisation, le modèle de vieillissement de la supercapacité peut être déterminé au moyen d'une loi de Eyring, un modèle de Kovaltchouk, ou tout autre modèle analogue. Notamment, le modèle de vieillissement peut être conforme à l'exemple décrit à l'étape 3) du procédé selon l'invention.

Selon une option de réalisation, le moyen de stockage d'énergie électrique peut comporter une batterie électrique. Alternativement ou en outre, le moyen de stockage d'énergie électrique peut être relié à un réseau électrique. Alternativement ou en outre, le moyen de stockage d'énergie électrique peut être relié à un composant électrique dissipatif, par exemple une résistance électrique. Les moyens de contrôle de la gestion d'énergie peuvent contrôler la charge de la supercapacité depuis le réseau électrique et/ou la batterie électrique. De plus, les moyens de contrôle de la gestion d'énergie peuvent contrôler la décharge de la supercapacité dans le réseau électrique et/ou dans la batterie électrique et/ou dans le composant électrique dissipatif.

Conformément à un mode de réalisation de l'invention, les moyens de contrôle de la gestion d'énergie peuvent comprendre des moyens de comparaison de l'état de la charge de la supercapacité avec une cible d'état de charge de la supercapacité, la cible d'état de charge de la supercapacité étant définie au moyen du vieillissement déterminé. Les moyens de contrôle peuvent être conformes à l'exemple de réalisation décrit à l'étape 5) du procédé selon l'invention.

Le procédé et le système selon l'invention sont particulièrement adaptés à un système houlomoteur et à un compensateur de pilonnement.

Un système houlomoteur permet de convertir l'énergie de la houle en une autre énergie, par exemple une énergie mécanique ou électrique. Un système houlomoteur comporte généralement un élément mobile, également appelé pendule ou flotteur, qui a un mouvement oscillatoire sous l'action de la houle. Le moyen mobile coopère avec une machine de conversion (moyen d'entraînement), appelée aussi système de prise de puissance (PTO de l'anglais « power take off »), qui comporte dans la plupart des cas un générateur électrique couplé à un dispositif permettant d'adapter la transmission du mouvement oscillatoire, pour convertir le mouvement du moyen mobile en énergie récupérable. Dans certains cas, la machine de conversion peut agir en tant que moteur en générant un effort sur le moyen mobile. En effet, pour récupérer une puissance via la machine de conversion, on produit un couple ou une force qui résiste au mouvement du mobile (mode générateur). Par contre, si la machine de conversion le permet, on peut fournir une puissance à la machine de conversion pour fournir un couple ou une force qui entraîne le mobile afin de l'aider à se mettre en résonance avec les vagues (mode moteur).

Selon l'invention, la machine de conversion est une machine électrique, et le système houlomoteur comporte en outre un moyen de stockage d'énergie électrique pour restituer et récupérer de l'énergie de la machine électrique. Ce moyen de stockage d'énergie électrique comporte avantageusement au moins une supercapacité. La gestion d'énergie du moyen de stockage d'énergie électrique est mise en œuvre conformément au procédé et/ou au système de gestion d'énergie selon l'invention.

Le système houlomoteur selon l'invention est adapté à tout type de système houlomoteur avec au moins un moyen mobile, par exemple ceux décrits dans la demande de brevet FR 2973448 (US 9261070). Le procédé de gestion d'énergie selon l'invention peut être également appliqué à un système houlomoteur appartenant à la catégorie de systèmes houlomoteurs avec colonnes d'eau oscillantes (OWC de l'anglais Oscillating Water Column).

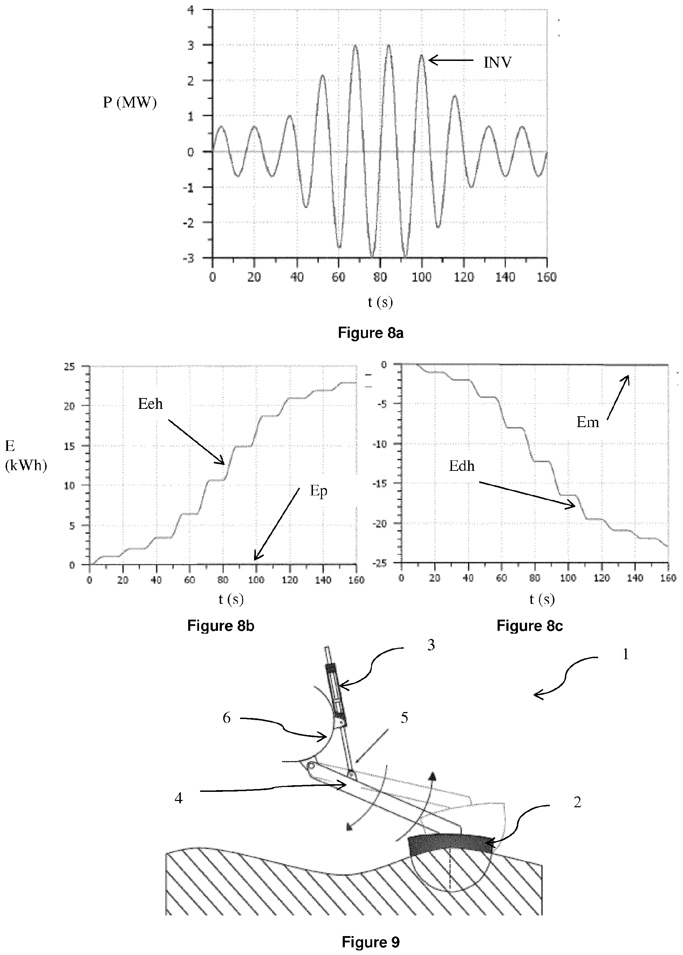

La figure 9 illustre, de manière schématique, un exemple non limitatif de système houlomoteur 1. Le système houlomoteur 1 comporte un moyen mobile 2, qui flotte (la houle est représentée de manière schématique par la surface hachurée). Le moyen mobile 2 coopère, au moyen d'un bras de levier 4, avec une machine de conversion basée sur un générateur électrique 3, qui est, dans ce cas, un générateur linéaire. Le bras de levier 4 et le générateur électrique sont articulés par rapport à une installation 6. Les mouvements du bras de levier sont représentés schématiquement par des flèches.

L'invention concerne également un compensateur de pilonnement équipé d'au moins un système d'actionnement électrique. Le compensateur de pilonnement permet de maintenir sous tension constante des outils de forage lors d'opérations de forage en mer. En effet, la houle provoque, entre autres effets, le pilonnement, c'est-à-dire un mouvement oscillatoire de translation verticale, des engins flottants. Quand ceux-ci supportent des outils, tels que des outils de forage, il est nécessaire de compenser le pilonnement afin que l'outil soit en permanence en contact avec le fond du trou. Le système d'actionnement électrique comporte notamment un moyen d'entraînement électrique pour entraîner les moyens mobiles formés par les outils de forage, et comportent un système de stockage d'énergie électrique comportant au moins une supercapacité. La gestion d'énergie du moyen de stockage d'énergie électrique est mise en œuvre conformément au procédé et/ou au système de gestion d'énergie selon l'invention.

Par exemple, l'invention peut s'appliquer au système de compensation décrit dans la demande de brevet FR 2575452 (US 5520369), dans lequel les vérins hydrauliques et les accumulateurs sont remplacés, totalement ou partiellement, par un système d'actionnement électrique. En effet, le compensateur de pilonnement décrit dans cette demande de brevet nécessite, par l'utilisation de vérins hydrauliques, la présence d'accumulateurs encombrants et lourds. Le remplacement total ou partiel de ces vérins hydrauliques permet de supprimer ces accumulateurs, ou de réduire les dimensions des accumulateurs.

Le compensateur de pilonnement selon l'invention comporte :

- un premier moufle, également appelé moufle fixe ou en anglais « Crown block », le premier moufle étant équipé d'au moins une poulie,
- un deuxième moufle, également appelé moufle mobile ou en anglais « Travelling block », sur lequel est accroché les outils de forage, le deuxième moufle étant équipé d'au moins une poulie ; de préférence les premier et deuxième moufles sont alignés verticalement,
- un système articulé comprenant au moins deux bras articulés, de préférence deux ou quatre bras disposés symétriquement, les bras articulés reliant l'installation mobile au premier moufle, chaque bras articulé comprenant au moins une poulie,
- un câble fixé par des moyens de retenue sur l'installation mobile et passant par les poulies des bras articulés et des premier et deuxième moufles, le câble formant au moins une boucle autour des premier et deuxième moufles ; les moyens de retenue du câble sur l'installation mobile peuvent comprendre au moins un treuil permettant de régler la longueur du câble, et
- un système d'actionnement électrique tel que décrit précédemment, dont une extrémité est liée au premier moufle et l'autre extrémité est liée à l'installation mobile, notamment une plateforme flottante ou un navire.

On rappelle qu'un moufle est un dispositif mécanique permettant le levage d'une charge par plusieurs brins de câble.

Le mouvement de pilonnement de l'installation mobile est compensé en grande partie par le déplacement du premier moufle par rapport à l'installation mobile. Ainsi, le deuxième moufle est immobile par rapport à un repère fixe, par exemple le fond de la mer. Le déplacement du premier moufle est piloté par le système d'actionnement linéaire et est permis par le système articulé.

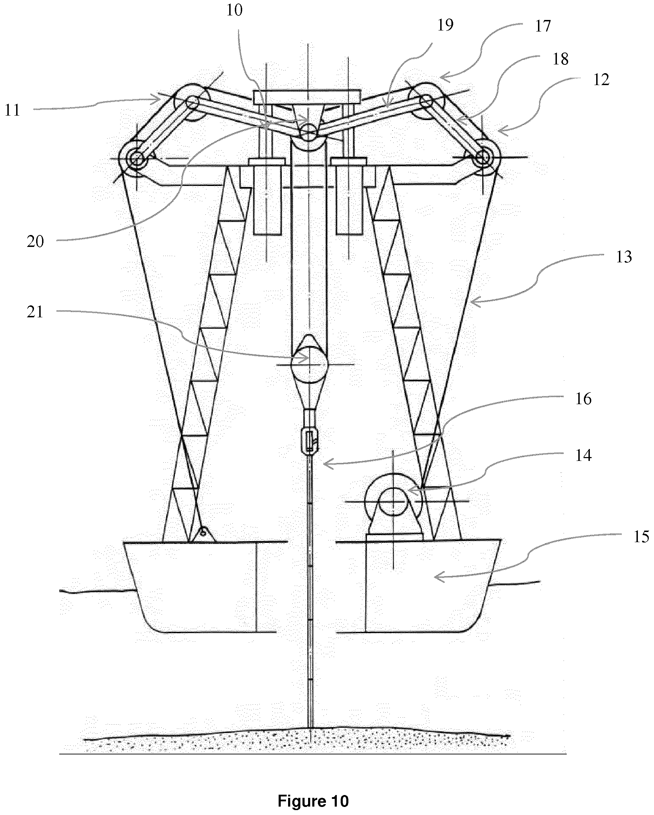

La figure 10 représente un compensateur de pilonnement selon un mode de réalisation de l'invention. Le compensateur de pilonnement est installé sur une installation mobile offshore. Le système de compensation permet d'accrocher un élément 16 (par exemple des outils de forage) sur un deuxième moufle 21 par l'intermédiaire d'un crochet. Le compensateur de pilonnement comporte en outre un premier moufle 20, deux bras articulés 11 reliés à un support 15 relié à l'installation mobile, deux systèmes d'actionnement électriques 10 (les moyens de stockage de l'énergie électrique et le système de gestion de l'énergie électrique ne sont pas représentés) et un câble 13 fixé par des moyens de retenue 14, le câble 13 passant par les poulies des bras articulés 11 et par les premier et deuxième moufles 20 et 21. Tel que représenté, le premier moufle 20, le deuxième moufle 21 et l'élément accroché sont alignés verticalement, et le mouvement de pilonnement à compenser est un mouvement vertical.

Tel qu'illustré et de manière non limitative, chaque bras articulé 11 comporte une poulie de renvoi 12 reliée au support 15 relié à l'installation mobile, une poulie intermédiaire 17, une première biellette 18 entre la poulie de renvoi 12 et la poulie intermédiaire 17 et une deuxième biellette 19 entre la poulie intermédiaire 17 et le premier moufle 8.

Lorsque le niveau de la mer est bas, les tiges des systèmes d'actionnement électriques 10 sont entièrement sorties et le premier moufle 20 est éloigné du niveau de l'installation mobile 15. Dans cette position, le ou les moteurs électriques des systèmes d'actionnement électriques 10 sont alimentés par des moyens de stockage d'énergie (non représentés) tels que décrits ci-dessus, comprenant au moins une supercapacité.

A l'inverse, lorsque le niveau de la mer monte, les tiges des systèmes d'actionnement électriques linéaires sont entièrement rentrées et le premier moufle 20 est proche du niveau de l'installation mobile 15. Dans cette position, le ou les moteurs électriques des systèmes d'actionnement électriques 10 fournissent de l'énergie, qui est stockée dans les moyens de stockage d'énergie.

Dans ce cas, par rapport à l'art antérieur des vérins hydrauliques avec leurs réserves oléopneumatiques, on évite tous les systèmes encombrants et complexes de circulation de fluide, et tous les problèmes de fuite hydraulique. De plus, le gain de masse et de volume lié au remplacement des réserves oléopneumatiques par des supercondensateurs peut être très conséquent, approchant un ordre de grandeur dans les cas favorables, ce qui a d'importantes répercussions sur l'encombrement de la plate-forme.

Pour cette application, le système d'actionnement électrique peut être linéaire, et peut comprendre de préférence une vis à rouleaux, plusieurs moteurs asynchrones à courant alternatifs et des supercondensateurs. Cette conception du système d'actionnement linéaire permet un rendement optimisé, un encombrement et un poids réduits du système d'actionnement, ce qui permet une conception simplifiée de l'installation mobile sur laquelle se trouve le compensateur de pilonnement.

Une variante de ce système peut être obtenue en ajoutant un vérin couplant le moufle 20 du crown block et le travelling block 21 et permettant d'ajuster de manière plus précise le poids sur l'outil.

Le système d'actionnement électrique selon l'invention peut aussi être utilisé directement, sans le système de poulie tel que décrit dans brevet FR 2575452 (US 5520369). Dans ce cas, il assure seul le maintien en position de la charge.

Le procédé et le système de gestion d'énergie selon l'invention peuvent également être utilisés pour un système d'entraînement électrique d'un système de tensionnement de tubes verticaux, tels que des risers qui effectuent la liaison verticale entre le fond de mer et la surface sur des supports flottants de forage ou de production pétrolière.

De manière générale, le procédé et le système de gestion d'énergie selon l'invention sont généralisés à tout système électrifié embarquant un moyen de stockage électrique par supercapacités et permettant de récupérer l'énergie marine.

Exemple comparatif :

Afin de montrer les avantages du procédé et du système de gestion d'énergie selon l'invention, on met en œuvre un exemple comparatif pour le cas de l'utilisation dans un compensateur de pilonnement comportant un système d'entraînement électrique. Lors du fonctionnement du système électrique de compensation du pilonnement, le moteur électrique fait des envois de puissance récupérée par le mouvement de houle vers le pack de supercapacités (charge) et fait des appels de puissance au pack de supercapacités (décharge) pour maintenir la pression sur le train de tiges de forage et compenser le mouvement de la houle. Dans cette application, la puissance stockée et produite par le pack de supercapacités est de l'ordre du MW et nécessite des niveaux de tension et de courant très élevés.

Dans cet exemple, on illustre le gain apporté par le procédé et le système selon l'invention. Pour cela, on considère un état de houle initial produisant sur le compensateur de pilonnement une sollicitation en puissance électrique sinusoïdale de période 16 s et d'amplitude 0.7 MW. Un train de vagues plus important arrive ensuite, menant à une sollicitation toujours sinusoïdale de période 16 s mais d'amplitude 3 MW. Une fois le train de vagues passé, le système revient à son état initial. Le profil de puissance P (MW) en fonction du temps t(s) de l'état de la houle considéré est indiqué sur la figure 4.

Pour cet exemple, le pack est constitué de cellules de supercapacités de 3000 F montées en série et en parallèle : 19 branches de 356 cellules en série (noté 356s19p). Leur résistance interne est de 0.29 mΩ. La tension haute de fonctionnement est fixée à 2,7 V et la tension basse à 0 V. Leur vieillissement (SOA) est évalué grâce au modèle de Kovaltchouk (ce modèle est décrit dans le document Kovaltchouk, T.; Multon, B.; Ben Ahmed, H.; Aubry, J.; Venet, P. Enhanced aging model for supercapacitors taking into account power cycling: Application to the sizing of an Energy Storage System in a Direct Wave Energy Converter:. In , 2014; pp 1-10.).

Sur la figure 5 est calculé l'état de charge cible $SOC_{obj}$ moyen en fonction de la puissance demandée au système électrique P (MW), de manière à optimiser à la fois les performances électriques et la durabilité du pack. Cet état de charge est déterminé conformément à l'exemple de réalisation décrit à l'étape 5) du procédé selon l'invention. Pour obtenir cette courbe, le problème permettant de déterminer la tension optimale U qui a été résolu est le suivant :

$$\min_{U} \frac{dSOA}{dt} \Big/ \begin{cases} P_{disponible} \geq P_{fournie} \\ E_{disponible} \geq E_{fournie} \\ I_{RMS} \leq I_{max}^{RMS} \end{cases}$$

avec SOA le vieillissement de la supercapacité, U la tension optimale de la supercapacité, $I_{max}^{RMS}$ le courant efficace maximum, $P_{disponible}$ la puissance disponible par la supercapacité, $P_{fournie}$ la puissance demandée par le système, $E_{disponible}$ l'énergie disponible par la supercapacité, et $E_{fournie}$, l'énergie nécessaire pour le fonctionnement du système.

Ici une hypothèse de puissance fournie sinusoïdale et de période 16 s a été choisie. Dans ce cas concret, selon ce mode de réalisation de l'invention, l'état de charge cible $SOC_{obj}$ est bas (< 0,5) quand la houle est faible, alors qu'en cas de gros temps, il est augmenté pour permettre une réponse adéquate du système de stockage jusqu'à atteindre les limites du système de stockage lors de trop forts appels de puissance, nécessitant de fixer le cible $SOC_{obj}$ au voisinage du SOC maximal de 100 %.

On peut ainsi remarquer que l'algorithme de gestion suivant l'invention préconise de placer le pack de supercapacités à haut SOC, c'est-à-dire à un niveau de tension élevé, pour limiter son vieillissement. Ceci s'explique par les plus faibles courants résultant de la tension élevée pour répondre à la puissance demandée. On obtient ainsi une préconisation contre intuitive qui pousse à privilégier les forts états de charge pour absorber les fortes puissances en limitant le courant demandé aux cellules.

*Cas selon l'art antérieur 1 : la tension initiale est fixée à 1.3 V par cellule*

Pour ce cas, on initialise arbitrairement la tension de chaque cellule à 1.3 V.

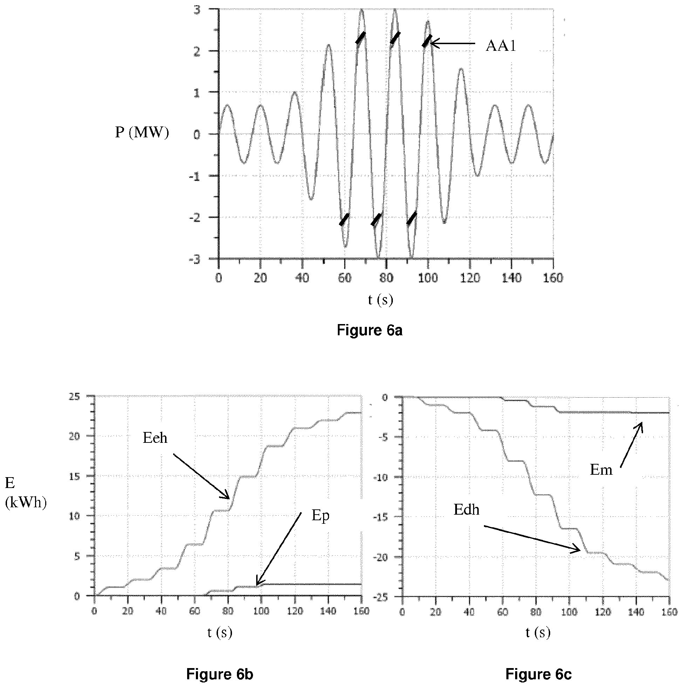

La figure 6a illustre la puissance P(MW) demandée au système de stockage notée AA1 comparée à la puissance totale demandée au système électrique (conforme à la courbe illustrée en figure 4), en fonction du temps t(s). On remarque que les courbes sont sensiblement superposées, sauf pour les amplitudes les plus élevées, où la puissance demandée au système de stockage est inférieure à la puissance demandée au système électrique (cf. traits épais). Sur cette figure, il apparaît donc un manque de puissance du système de stockage qui n'est pas capable de répondre aux sollicitations demandées. Lors de l'arrivée de la vague, la puissance est trop importante et la tension trop faible. De ce fait, le courant nécessaire pour atteindre la puissance demandée dépasse le courant maximum autorisé.

Ainsi on a une perte d'énergie lors de la recharge qui correspond à la différence entre l'énergie envoyée au système électrique et l'énergie envoyée au moyen de stockage. Mais il y a aussi un manque d'énergie lors de la décharge aussi due à la limite en courant. Ces déficits en énergie sont représentés sur les figures 6b et 6c. La figure 6b illustre l'énergie envoyée par les vagues lors de la charge Eeh, et l'énergie perdue Ep lors de la charge, en fonction du temps t(s). La figure 6c illustre l'énergie demandée au système de stockage Edh lors de la décharge, et l'énergie manquant Em lors de la décharge, en fonction du temps. Sur ces figures, on remarque des pertes d'énergie et un manquement d'énergie avec cette fixation de la tension initiale de la tension de la supercapacité à 1.3 V (selon l'art antérieur).

Il est aussi possible d'observer l'état de vieillissement obtenu suite à cet événement. En nous basant sur le modèle décrit précédemment, le vieillissement SOA atteint constitue la référence de nos calculs et est considéré comme étant 100.

*Cas selon l'art antérieur 2 : la tension initiale est de 2.6 V*

Pour ce cas, on initialise arbitrairement la tension de chaque cellule à 2.6 V.

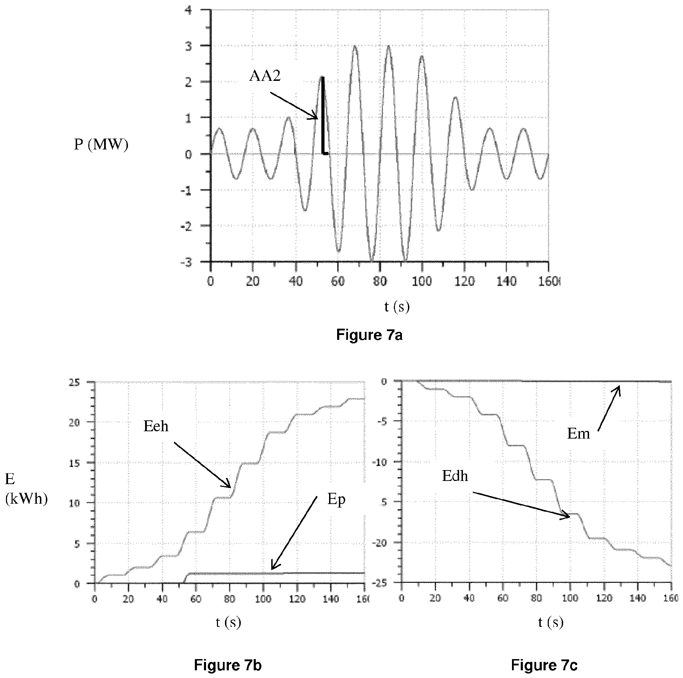

Les figures 7a à 7c correspondent aux figures 6a à 6c pour le cas selon l'art antérieur 2 (noté AA2).

Sur la Figure 7a, on peut apercevoir aux alentours de 50 s que la puissance demandée au système de stockage est inférieure à celle demandée par le réseau (cf. traits épais). Cela s'explique par le fait que la cellule est trop chargée et qu'elle n'est pas capable d'accepter plus d'énergie. Cela se traduit ainsi par une perte d'énergie minime de l'ordre de 1300 Wh (figure 7b). Par contre le système de stockage n'a ici aucune difficulté à fournir toute l'énergie demandée lors des décharges. C'est ce qui est visible sur la figure 7c.

En ce qui concerne le vieillissement, le vieillissement SOA atteint en fin d'événement une valeur de 35,7.

*Cas optimisé selon l'invention : la tension initiale est fixée à 2,28 V*

Au moyen du procédé et du système selon l'invention, la tension initiale optimale (déterminée par la gestion de l'énergie de la supercapacité) est déterminée à 2,28 V.

Les figures 8a à 8c correspondent aux figures 6a à 6c pour le cas selon l'invention (noté INV).

Sur la figure 8a, il est possible de vérifier que dans le cas d'une tension initiale optimisée permettant de réduire le vieillissement tout en assurant la récupération totale de l'énergie et la fourniture de toute l'énergie demandée, le système de stockage parvient à suivre les demandes en énergie faites au système électrique ainsi que de stocker toute l'énergie envoyée au système électrique. En effet, sur la figure 8a les deux courbes sont entièrement superposées. Lors de l'événement étudié on ne remarque ni énergie perdue (figure 8b) ni énergie manquante (figure 8c).

En ce qui concerne le vieillissement, on atteint une valeur de 43.7. Cette valeur est nettement inférieure au vieillissement calculé pour le cas n° 1 selon l'art antérieur. Toutefois, cette valeur est un peu plus élevée que dans le cas d'une tension initiale plus élevée car les courants de fonctionnement sont légèrement supérieurs. Cependant, cette valeur de tension initiale permet d'optimiser la récupération d'énergie, et donc l'efficacité (ou rendement) du système électrique, ce qui n'était pas le cas pour les deux exemples selon l'art antérieur.

## Revendications

1. Procédé de gestion d'énergie d'un moyen de stockage d'énergie d'un système électrique, ledit système électrique comportant au moins un élément mobile (EMO), au moins un moyen d'entraînement électrique (ENT) dudit élément mobile (EMO), et au moins un moyen de stockage d'énergie électrique pour fournir ou récupérer une énergie électrique audit moyen d'entraînement, ledit élément mobile (EMO) étant soumis à la houle, et ledit moyen de stockage comprenant au moins une supercapacité ($\mu$C), **caractérisé en ce qu'**on construit un modèle de vieillissement de ladite supercapacité (MOD), ledit modèle de vieillissement reliant le vieillissement de ladite supercapacité (SOA) à une sollicitation de ladite supercapacité, et **en ce qu'**on réalise les étapes suivantes :

   a) on détermine un état de la houle future (HOU) ;
   b) on déduit dudit état de la houle future une sollicitation future (SOL) de ladite supercapacité par ledit moyen d'entraînement ;
   c) on détermine ledit vieillissement de ladite supercapacité (SOA) au moyen dudit modèle de vieillissement (MOD) et de ladite sollicitation de ladite supercapacité (SOL) ; et
   d) on contrôle l'énergie de ladite supercapacité dudit moyen de stockage d'énergie en fonction dudit vieillissement (SOA) de ladite supercapacité ($\mu$C).

2. Procédé selon la revendication 1, dans lequel on détermine ledit état de la houle future (HOU) au moyen de données météorologiques et/ou au moyen de capteurs et/ou au moyen d'une méthode d'estimation de la houle.

3. Procédé selon l'une des revendications précédentes, dans lequel ledit modèle de vieillissement (MOD) de ladite supercapacité ($\mu$C) est déterminé au moyen d'une loi de Eyring ou au moyen d'un modèle de Kovaltchouk.

4. Procédé selon l'une des revendications précédentes, dans lequel la gestion d'énergie de ladite supercapacité est choisie parmi une charge de ladite supercapacité ($\mu$C) depuis un réseau électrique (RES) et/ou une batterie électrique, et/ou une décharge de ladite supercapacité ($\mu$C) dans un réseau électrique (RES) et/ou dans une batterie électrique et/ou dans un composant dissipatif.

5. Procédé selon l'une des revendications précédentes, dans lequel on détermine ladite gestion d'énergie de ladite supercapacité ($\mu$C) en comparant l'état de charge de ladite supercapacité (SOC) par rapport à au moins une cible d'état de charge, ladite cible d'état de charge de ladite supercapacité étant définie au moyen dudit vieillissement de ladite supercapacité (SOA).

6. Procédé selon la revendication 5, dans lequel on détermine ladite gestion d'énergie en mettant en œuvre les étapes suivantes :

   a) on détermine l'état de charge moyen cible $SOC_{obj}$ futur de ladite supercapacité en fonction dudit vieillissement,
   b) on compare l'état de charge cible $SOC_{obj}$ à l'état de charge réel $SOC_{ucap}$ de ladite supercapacité ($\mu$C), et
   c) en fonction de ladite comparaison, on charge ou on décharge la supercapacité, de la manière suivante :

   i) si l'état de charge réel est supérieur à l'état de charge cible, alors on décharge ladite supercapacité, et
   ii) si l'état de charge réel est inférieur à l'état de charge cible, alors on charge ladite supercapacité.

7. Système de gestion d'énergie d'un moyen de stockage d'énergie d'un système électrique, ledit système électrique comportant au moins un élément mobile (EMO), au moins un moyen d'entraînement électrique (ENT) dudit élément mobile, et au moins un moyen de stockage d'énergie électrique pour fournir ou récupérer une énergie électrique audit moyen d'entraînement, ledit élément mobile étant soumis à la houle, et ledit moyen de stockage comprenant au moins une supercapacité ($\mu$C), **caractérisé en ce que** ledit système de gestion comprend des moyens de détermination d'un état de la houle future (MES), des moyens de détermination de la sollicitation future de ladite supercapacité par ledit moyen d'entraînement, des moyens de détermination du vieillissement de ladite supercapacité au moyen d'un modèle de vieillissement de ladite supercapacité et de ladite sollicitation de ladite supercapacité, et des moyens de contrôle de la gestion d'énergie de ladite supercapacité à partir dudit vieillissement de ladite supercapacité, ledit modèle de vieillissement de ladite supercapacité reliant le vieillissement de ladite supercapacité à ladite sollicitation.

8. Système selon la revendication 7, dans lequel lesdits moyens de détermination d'un état de la houle future (MES) comporte des moyens d'analyse de données météorologiques et/ou des capteurs et/ou des moyens d'estimation de la houle.

9. Système selon l'une des revendications 7 ou 8, dans lequel ledit modèle de vieillissement de ladite supercapacité ($\mu$C) est déterminé au moyen d'une loi de Eyring ou au moyen d'un modèle de Kovaltchouk.

10. Système selon l'une des revendications 7 à 9, dans lequel ladite supercapacité ($\mu$C) étant reliée à un réseau électrique (RES) et/ou une batterie électrique, lesdits moyens de contrôle de la gestion d'énergie électrique sont aptes à contrôler la charge et/ou la décharge de ladite supercapacité ($\mu$C) vers ou depuis ledit réseau électrique (RES) et/ou ladite batterie électrique.

11. Système selon l'une des revendications 7 à 10, dans lequel lesdits moyens de contrôle comprennent des moyens de comparaison de l'état de charge (SOC) de ladite supercapacité ($\mu$C) par rapport à au moins une cible d'état de charge, la dite cible d'état de charge de ladite supercapacité ($\mu$C) étant définie au moyen dudit vieillissement de ladite supercapacité ($\mu$C).

12. Système houlomoteur (1) pour convertir l'énergie de la houle en énergie électrique, ledit système houlomoteur (1) comprenant un moyen mobile (2), une machine de conversion électrique (3), et un moyen de stockage de l'énergie électrique comportant au moins une supercapacité, **caractérisé en ce que** ledit système houlomoteur (1) comporte un système de gestion d'énergie selon l'une des revendications 7 à 11.

13. Compensateur de pilonnement pour des outils de forage (16) accrochés à une installation mobile (15) en mer comprenant un moyen d'entraînement électrique (10) et un moyen de stockage d'énergie électrique comportant au moins une supercapacité, **caractérisé en ce que** ledit compensateur de pilonnement comporte un système de gestion d'énergie selon l'une des revendications 7 à 11.

**Patentansprüche**

1. Verfahren zur Energieverwaltung einer Energiespeichereinrichtung eines elektrischen Systems, wobei das elektrische System mindestens ein bewegliches Element (EMO), mindestens eine elektrische Antriebseinrichtung (ENT) des beweglichen Elements (EMO) und mindestens eine elektrische Energiespeichereinrichtung aufweist, um eine elektrische Energie an die Antriebseinrichtung zu liefern oder wiederzugewinnen, wobei das bewegliche Element (EMO) dem Wellengang ausgesetzt ist, und die Speichereinrichtung mindestens einen Superkondensator (pC) enthält, **dadurch gekennzeichnet, dass** ein Alterungsmodell des Superkondensators (MOD) konstruiert wird, wobei das Alterungsmodell die Alterung des Superkondensators (SOA) mit einer Beanspruchung des Superkondensators verbindet, und dass die folgenden Schritte durchgeführt werden:

a) es wird ein Zustand des zukünftigen Wellengangs (HOU) bestimmt;
b) vom Zustand des zukünftigen Wellengangs wird eine zukünftige Beanspruchung (SOL) des Superkondensators durch die Antriebseinrichtung abgeleitet;
c) die Alterung des Superkondensators (SOA) wird mittels des Alterungsmodells (MOD) und der Beanspruchung des Superkondensators (SOL) bestimmt; und
d) die Energie des Superkondensators der Energiespeichereinrichtung wird abhängig von der Alterung (SOA) des Superkondensators (pC) gesteuert.

2. Verfahren nach Anspruch 1, wobei der Zustand des zukünftigen Wellengangs (HOU) mittels meteorologischer Daten und/oder mittels Sensoren und/oder mittels einer Schätzmethode des Wellengangs bestimmt wird.

3. Verfahren nach einem der vorhergehenden Ansprüche, wobei das Alterungsmodell (MOD) des Superkondensators (pC) mittels eines Eyring-Gesetzes oder mittels eines Kovaltchouk-Modells bestimmt wird.

4. Verfahren nach einem der vorhergehenden Ansprüche, wobei die Energieverwaltung des Superkondensators ausgewählt wird unter einer Ladung des Superkondensators (pC) ausgehend von einem Stromnetz (RES) und/oder einer elektrischen Batterie, und/oder einer Entladung des Superkondensators (pC) in ein Stromnetz (RES) und/oder in eine elektrische Batterie und/oder in ein dissipatives Bauteil.

5. Verfahren nach einem der vorhergehenden Ansprüche, wobei die Energieverwaltung des Superkondensators (pC) bestimmt wird, indem der Ladezustand des Superkondensators (SOC) mit mindestens einem Ladezustandsziel verglichen wird, wobei das Ladezustandsziel des Superkondensators mittels der Alterung des Superkondensators (SOA) definiert wird.

6. Verfahren nach Anspruch 5, wobei die Energieverwaltung bestimmt wird, indem die folgenden Schritte durchgeführt werden:

   a) das zukünftige mittlere Ladezustandsziel $SOC_{obj}$ des Superkondensators wird abhängig von der Alterung bestimmt,
   b) das Ladezustandsziel $SOC_{obj}$ wird mit dem realen Ladezustand $SOC_{ucap}$ des Superkondensators (pC) verglichen, und
   c) abhängig von dem Vergleich wird der Superkondensator folgendermaßen geladen oder entladen:

      i) wenn der reale Ladezustand höher ist als das Ladezustandsziel, wird der Superkondensator entladen, und
      ii) wenn der reale Ladezustand niedriger ist als das Ladezustandsziel, wird der Superkondensator geladen.

7. Energieverwaltungssystem einer Energiespeichereinrichtung eines elektrischen Systems, wobei das elektrische System mindestens ein bewegliches Element (EMO), mindestens eine elektrische Antriebseinrichtung (ENT) des beweglichen Elements, und mindestens eine elektrische Energiespeichereinrichtung aufweist, um eine elektrische Energie an die Antriebseinrichtung zu liefern oder wiederzugewinnen, wobei das bewegliche Element dem Wellengang ausgesetzt ist, und die Speichereinrichtung mindestens einen Superkondensator (pC) enthält, **dadurch gekennzeichnet, dass** das Verwaltungssystem Einrichtungen zur Bestimmung eines Zustands des zukünftigen Wellengangs (MES), Einrichtungen zur Bestimmung der zukünftigen Beanspruchung des Superkondensators durch die Antriebseinrichtung, Einrichtungen zur Bestimmung der Alterung des Superkondensators mittels eines Alterungsmodells des Superkondensators und der Beanspruchung des Superkondensators, und Einrichtungen zur Steuerung der Energieverwaltung des Superkondensators ausgehend von der Alterung des Superkondensators enthält, wobei das Alterungsmodell des Superkondensators die Alterung des Superkondensators mit der Beanspruchung verbindet.

8. System nach Anspruch 7, wobei die Einrichtungen zur Bestimmung eines Zustands des zukünftigen Wellengangs (MES) Analyseeinrichtungen meteorologischer Daten und/oder Sensoren und/oder Schätzeinrichtungen des Wellengangs aufweisen.

9. System nach einem der Ansprüche 7 oder 8, wobei das Alterungsmodell des Superkondensators (pC) mittels eines Eyring-Gesetzes oder mittels eines Kovaltchouk-Modells bestimmt wird.

10. System nach einem der Ansprüche 7 bis 9, wobei, da der Superkondensator (pC) mit einem Stromnetz (RES) und/oder einer elektrischen Batterie verbunden ist, die Steuereinrichtungen der Verwaltung elektrischer Energie das Laden und/oder das Entladen des Superkondensators (pC) zu oder vom Stromnetz (RES) und/oder von der elektrischen Batterie steuern können.

11. System nach einem der Ansprüche 7 bis 10, wobei die Steuereinrichtungen Vergleichseinrichtungen des Ladezustands (SOC) des Superkondensators (pC) mit mindestens einem Ladezustandsziel enthalten, wobei das Ladezustandsziel des Superkondensators (pC) mittels der Alterung des Superkondensators (pC) definiert wird.

12. Wellenkraftsystem (1) zur Umwandlung der Energie des Wellengangs in elektrische Energie, wobei das Wellenkraftsystem (1) eine bewegliche Einrichtung (2), eine elektrische Umwandlungsmaschine (3) und eine Speichereinrichtung der elektrischen Energie enthält, die mindestens einen Superkondensator aufweist, **dadurch gekennzeichnet, dass** das Wellenkraftsystem (1) ein Energieverwaltungssystem nach einem der Ansprüche 7 bis 11 aufweist.

13. Tauchschwingungskompensator für Bohrwerkzeuge (16), die an einer beweglichen Anlage (15) im Meer befestigt sind, der eine elektrische Antriebseinrichtung (10) und eine elektrische Energiespeichereinrichtung aufweist, die mindestens einen Superkondensator aufweist, **dadurch gekennzeichnet, dass** der Tauchschwingungskompensator ein Energieverwaltungssystem nach einem der Ansprüche 7 bis 11 aufweist.

**Claims**

1. Method for the energy management of an energy storage means of an electrical system, said electrical system including at least one mobile element (EMO), at least one means (ENT) for electrically driving said mobile element (EMO), and at least one electrical energy storage means for supplying or recovering electrical energy to or from said driving means, said mobile element (EMO) being subjected to swell, and said storage means comprising at least one supercapacitor (pC), **characterized in that** an ageing model (MOD) of said supercapacitor is constructed, said ageing model linking the ageing (SOA) of said supercapacitor with a demand on said supercapacitor, and **in that** the following steps are performed:

   a) determining a state of future swell (HOU);
   b) deducing, from said state of future swell, a future demand (SOL) on said supercapacitor by said driving means;
   c) determining said ageing (SOA) of said supercapacitor by way of said ageing model (MOD) and of said demand (SOL) on said supercapacitor; and
   d) controlling the energy of said supercapacitor of said energy storage means on the basis of said ageing (SOA) of said supercapacitor (pC).

2. Method according to Claim 1, wherein said state of future swell (HOU) is determined by way of weather data and/or by way of sensors and/or by way of a swell estimation method.

3. Method according to either of the preceding claims, wherein said ageing model (MOD) of said supercapacitor (pC) is determined by way of an Eyring law or by way of a Kovaltchouk model.

4. Method according to one of the preceding claims, wherein the energy management of said supercapacitor is chosen from among charging said supercapacitor (pC) from an electricity grid (RES) and/or an electric battery, and/or discharging said supercapacitor (pC) into an electricity grid (RES) and/or into an electric battery and/or into a dissipative component.

5. Method according to one of the preceding claims, wherein said energy management of said supercapacitor (pC) is determined by comparing the state of charge (SOC) of said supercapacitor with at least one state of charge target, said state of charge target of said supercapacitor being defined by way of said ageing (SOA) of said supercapacitor.

6. Method according to Claim 5, wherein said energy management is determined by implementing the following steps:

   a) determining the future target average state of charge $SOC_{obj}$ of said supercapacitor on the basis of said ageing,
   b) comparing the target state of charge $SOC_{obj}$ with the actual state of charge $SOC_{ucap}$ of said supercapacitor (pC), and
   c) on the basis of said comparison, charging or discharging the supercapacitor as follows:

      i) if the actual state of charge is higher than the target state of charge, then discharging said supercapacitor, and
      ii) if the actual state of charge is lower than the target state of charge, then charging said supercapacitor.

7. System for the energy management of an energy storage means of an electrical system, said electrical system including at least one mobile element (EMO), at least one means (ENT) for electrically driving said mobile element, and at least one electrical energy storage means for supplying or recovering electrical energy to or from said driving means, said mobile element being subjected to swell, and said storage means comprising at least one supercapacitor (pC), **characterized in that** said management system comprises means for determining a state of future swell (MES), means for determining the future demand on said supercapacitor by said driving means, means for determining the ageing of said supercapacitor by way of an ageing model of said supercapacitor and of said demand on said supercapacitor, and means for controlling the energy management of said supercapacitor on the basis of said ageing of said supercapacitor, said ageing model of said supercapacitor linking the ageing of said supercapacitor with said demand.

8. System according to Claim 7, wherein said means for determining a state of future swell (MES) include weather data analysis means and/or sensors and/or swell estimation means.

9. System according to either of Claims 7 and 8, wherein said ageing model of said supercapacitor (pC) is determined by way of an Eyring law or by way of a Kovaltchouk model.

10. System according to one of Claims 7 to 9, wherein, said supercapacitor (pC) being connected to an electricity grid (RES) and/or an electric battery, said means for controlling the electrical energy management are able to control the charging and/or the discharging of said supercapacitor (pC) from or to said electricity grid (RES) and/or said electric battery.

11. System according to one of Claims 7 to 10, wherein said control means comprise means for comparing the state of charge (SOC) of said supercapacitor ($\mu$C) with at least one state of charge target, said state of charge target of said supercapacitor (pC) being defined by way of said ageing of said supercapacitor (pC).

12. Wave energy system (1) for converting swell energy into electrical energy, said wave energy system (1) comprising a mobile means (2), an electrical conversion machine (3), and an electrical energy storage means including at least one supercapacitor, **characterized in that** said wave energy system (1) includes an energy management system according to one of Claims 7 to 11.

13. Heave compensator for drilling tools (16) tethered to an offshore mobile installation (15), comprising an electrical driving means (10) and an electrical energy storage means including at least one supercapacitor, **characterized in that** said heave compensator includes an energy management system according to one of Claims 7 to 11.

Figure 1

Figure 2

$R_{ESR}$

$C_{accu}$   $R_{fuites}$

**Figure 3**

P (MW)

t (s)

**Figure 4**

SOCobj

P (MW)

**Figure 5**

Figure 6a

Figure 6b

Figure 6c

P (MW)

AA2

t (s)

**Figure 7a**

E
(kWh)

Eeh

Ep

t (s)

Edh

Em

t (s)

**Figure 7b**

**Figure 7c**

P (MW)

Figure 8a

E
(kWh)

Figure 8b

Figure 8c

Figure 9

Figure 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3029712
- WO 2013096128 A
- EP 2268537 B1
- FR 1560260

- FR 2973448
- US 9261070 B
- FR 2575452
- US 5520369 A

**Littérature non-brevet citée dans la description**

- **KOVALTCHOUK, T. ; MULTON, B. ; BEN AHMED, H. ; AUBRY, J. ; VENET, P.** *Enhanced aging model for supercapacitors taking into account power cycling: Application to the sizing of an Energy Storage System in a Direct Wave Energy Converter,* 2014, 1-10